Europäisches Patentamt

European Patent Office

Office européen des brevets

(19)

(11) Veröffentlichungsnummer: **0 245 490 B1**

(12) # EUROPÄISCHE PATENTSCHRIFT

(45) Veröffentlichungstag der Patentschrift: **22.07.92**

(51) Int. Cl.5: **B01D 25/12**, B01D 29/96, B30B 9/04

(21) Anmeldenummer: **87900050.3**

(22) Anmeldetag: **14.11.86**

(86) Internationale Anmeldenummer:
**PCT/DE86/00502**

(87) Internationale Veröffentlichungsnummer:
**WO 87/02908 (21.05.87 87/11)**

(54) **FILTERPRESSE FÜR DIE FLUSSIGKEITSABTRENNUNG AUS SCHLÄMMEN BIS AUF EINEN HOHEN FESTSTOFF-GEHALT.**

(30) Priorität: **14.11.85 DE 3540357**

(43) Veröffentlichungstag der Anmeldung:
**19.11.87 Patentblatt 87/47**

(45) Bekanntmachung des Hinweises auf die Patenterteilung:
**22.07.92 Patentblatt 92/30**

(84) Benannte Vertragsstaaten:
**AT BE CH DE FR GB IT LI NL SE**

(56) Entgegenhaltungen:
**EP-A- 0 097 856       DE-A- 3 248 231
DE-A- 3 402 165       GB-A- 1 032 933
US-A- 3 503 517       US-A- 3 840 122
US-A- 3 965 011**

(73) Patentinhaber: **HAKÜ HANS KÜBLER GMBH FILTERANLAGEN UND MASCHINENBAU
Dietlinger Strasse 93
W-7534 Birkenfield(DE)**

(72) Erfinder: **PAUSCH, Rudolf
Luisenstrasse 39
W-7530 Pforzheim(DE)**
Erfinder: **KÜBLER, Hans
Dietlinger Strasse 93
W-7534 Birkenfield(DE)**

(74) Vertreter: **Lutz, Johannes Dieter, Dr.
Patentanwälte Wolf & Lutz Eugensplatz 5
Postfach 13 10 01
W-7000 Stuttgart 1(DE)**

EP 0 245 490 B1

## Beschreibung

Die Erfindung betrifft eine Filterpresse für die Flüssigkeitsabtrennung aus Schlämmen wie kommunalen Klärschlämmen oder Industrieschlämmen bis auf einen hohen Feststoffgehalt und mit den weiteren, im Oberbegriff des Patentanspruchs 1 genannten, gattungsbestimmenden Merkmalen.

Eine Filterpresse dieser Art ist durch die DE-A-34 02 165 bekannt.

Die bekannte Filterpresse umfaßt mehrere Pressenelemente, die, je für sich gesehen, als selbständig funktionsfähige Kammerfilterpressen mit je einer mit Naßschlamm beschickbaren Pressenkammer ausgebildet sind. Jedes der Pressenelemente umfaßt eine fest auf ein Untergestell montierte, untere Membranplatte, ein auf diese mittels einer hydraulischen Antriebsvorrichtung aufsetzbare, der Grundform nach topf-förmiges Schließstück und eine in dem Schließstück beweglich geführte, ebenfalls mittels der hydraulischen Antriebsvorrichtung auf- und abbewegbare, obere Membranplatte, die insgesamt die Pressenkammer begrenzen. Die Pressenelemente sind, in Transportrichtung eines oberen und eines unteren Filtertuches gesehen, die, wie von der Technik der Siebbandpressen her bekannt, als geschlossene, endlose Bänder ausgebildet sind, nebeneinander bzw. hintereinander angeordnet, so daß diese Filtertuch-Bänder als Innenauskleidung für sämtliche der vorhandenen Pressenelemente ausnutzbar sind. Zur Anpassung an die Form der Pressenkammern ist das obere Filtertuch mit beispielsweise flach-pyramidenförmigen Ausbuchtungen versehen. Der zwischen den Filtertüchern in den Pressenkammern eingeschlossene Schlammkuchen kann durch Niederdrücken der beweglichen Membranplatte auf einen relativ hohen Feststoffgehalt um 50 % ausgepreßt werden.

Diese Membranplatte ist mittels zweier Führungsbolzen, die durch an der Deckplatte des Schließteils angeordnete Gleitlagerbuchsen hindurchtreten, an diesem auf- und ab-verschiebbar geführt. Innerhalb des Schließteils des jeweiligen Pressenelementes ist zwischen der beweglichen Membranplatte und der Innenseite der Deckplatte ein seinerseits dickwandig-plattenförmiger, elastisch vorspannbarer Körper angeordnet, der durch Anheben der Membranplatte innerhalb des Schließteiles um einen durch Anschlagwirkung begrenzten Vorspannhub bis auf eine definierte Höchstvorspannung zusammendrückbar ist. Durch diesen elastischen Körper soll eine Vorpressung des Filterkuchens mit definierten Preßdruck erzielt werden, bevor dann durch die Ausübung einer höheren Kraft, z.B. durch Druckbeaufschlagung eines Antriebs-Hydrozylinders die endgültige Pressung erfolgt, die zum End-Feststoffgehalt des Schlammkuchens führt.

Die bekannte Filterpresse ist aufgrund ihrer insoweit geschilderten konstruktiven und funktionellen Merkmale mit zumindest den folgenden Nachteilen behaftet:

Es müssen mindestens zwei Antriebseinheiten vorgesehen sein, nämlich eine erste, die auch bei maximalem Fülldruck das Schließteil in dessen geschlossener Pressenkammer entsprechender Position zu halten vermag, und eine zweite, mittels welcher die bewegliche Membranplatte im Sinne der Ausführung einer die Volumenverkleinerung der Pressenkammer und des Schlammkuchens vermittelnden Bewegung antreibbar ist. Diese Antriebseinheiten müssen auch auf nahezu gleich große Kraftentfaltung ausgelegt sein, wobei der Schließantrieb etwas kräftiger dimensioniert sein muß als der für die Pressung vorgesehene Antrieb der beweglichen Membranplatte, damit sichergestellt ist, daß die Pressenkammer auch bei maximalem Preßdruck geschlossen bleibt. Der für die Realisierung zweier Antriebseinheiten annähernd gleicher Auslegung erforderliche technischer Aufwand ist hoch. Die Anordnung des elastischen Körpers "innerhalb" des Schließteils ist wartungstechnisch ungünstig, da bei einem von Zeit zu Zeit erforderlichen Ersatz des elastischen Körpers umfangreiche Demontagearbeiten durchgeführt werden müssen, die zu entsprechend langen Ausfallzeiten der Presse führen. Entsprechend gilt es sinngemäß hinsichtlich das obere, mit den Ausbuchtungen versehene Filtertuch betreffender Wartungsarbeiten, das bei einer Auspressung des Filterkuchens erheblich stärker beansprucht ist als das untere Filtertuch und daher auch einem erhöhten Verschleiß unterworfen ist. Als verschleißfördernd wirkt sich hierbei auch aus, daß schon eine relativ geringe, nach längerem Gebrauch auftretende, bleibende Dehnung des oberen Filtertuches dazu führt, daß der Abstand der Ausbuchtungen, und sei es auch nur geringfügig, nicht mehr mit dem Abstand der Pressenelemente in Band-Längsrichtung gesehen, übereinstimmt, wodurch sich ungleichmäßige Beanspruchungen der Ausbuchtungen des oberen Filtertuches ergeben können. Die bekannte Filterpresse erfordert daher in relativ kurzen Zeitabständen aufwendige Wartungsarbeiten.

Aufgabe der Erfindung ist es daher, eine Filterpresse der eingangs genannten Art dahingehend zu verbessern, daß der zu ihrer Realisierung erforderliche technische Aufwand und der für Wartungsarbeiten erforderliche Zeitaufwand reduziert werden.

Diese Aufgabe wird erfindungsgemäß durch die im kennzeichnenden Teil des Patentanspruchs 1 genannten Merkmale gelöst.

Durch die hiernach vorgesehene Anordnung eines unter einer Mindestvorspannung stehenden

2

elastischen Körpers zwischen der Deckplatte des Schließteils und einer Führungsplatte, die mit dem Kolben des als Pressen-Antrieb vorgesehenen Hydrozylinders verbunden ist, deren Führung an den mit der beweglichen Membranplatte fest verbundenen Führungsbolzen sowie deren Abstützbarkeit an Anschlagringen der Führungsbolzen, ist sowohl zum Schließen eines Pressenelements als auch zur Verschiebung der beweglichen Membranplatte im Sinne der Ausführung des Preßhubes derselben nur ein einziger Antriebs-Hydrozylinder erforderlich, was eine erhebliche Vereinfachung der Filterpresse insgesamt bedeutet.

Durch die Anordnung des elastischen Körpers zwischen dem Schließteil und der Führungsplatte, d.h. "außerhalb" des jeweiligen Pressenelements sowie durch die Unterteilung des oberen Filtertuches in den einzelnen Pressenelementen zugeordnete Segmente, die durch einfach verbindbare und wieder lösbare Stecknähte miteinander gekoppelt sind, sind sowohl den elastisch vorspannbaren Körper als auch das Filtertuch betreffende Wartungsarbeiten, die ansonsten zu einem erheblichen Wartungsaufwand führen würden, wesentlich einfacher durchführbar als bei der bekannten Filterpresse.

Dies gilt a forteriori, wenn für den elastischen Körper die Anordnung und Gestaltung gemäß Anspruch 2 vorgesehen ist.

In Kombination mit den insoweit erläuterten Gestaltungen der - erfindungsgemäßen - Filterpresse wird deren Wartungsfreundlichkeit durch die Gestaltungsvarianten der Filtertücher gemäß den Ansprüchen 3 bis 7 weiter verbessert.

Das Merkmal des Anspruchs 8 erbringt den Vorteil einer Verschleißminderung an den Filtertuch-Segmenten.

Mittels eines gemäß Anspruch 9 vorgesehenen Abstreifers, für den durch die Merkmale des Anspruchs 10 eine vorteilhaft einfache, mit geringem technischen Aufwand realisierbare Gestaltung angegeben ist, wird das selbsttätige Ablösen des ausgepreßten Schlammkuchens vom unteren Filtertuch am Ausgang der Presse wesentlich erleichtert, wobei ein solcher Abstreifer auch als Führungselement für die Weiterleitung des Schlammkuchens ausgenutzt werden kann.

Für einen gemäß Anspruch 11 für das Ablösen von Schlammkuchenteilen vom oberen Filtertuch vorgesehenen, weiteren Abstreifer sind durch die Merkmale der Ansprüche 11 bis 14 alternativ oder in Kombination realisierbare Gestaltungen angegeben, die eine wirkungsvolle und gleichwohl schonende Ablösung relativ fest an dem oberen Filtertuch haftender Schlammkuchenteile ermöglichen.

Mittels gemäß Anspruch 15 vorgesehener Sprühvorrichtungen, für die durch die Merkmale der Ansprüche 16 bis 18 vorteilhafte einfache Gestaltungen und funktionsgünstige Anordnungen angegeben sind, können die Filtertücher, ohne aus der Presse entfernt werden zu müssen, hinreichend effizient gereinigt werden, so daß eine Vielzahl von Preßzyklen unmittelbar aufeinanderfolgend ausgeführt werden können. Nicht zuletzt hierdurch ist ein besonders rationeller und entsprechend kostengünstiger Betrieb der erfindungsgemäßen Filterpresse möglich.

Weitere Einzelheiten und Merkmale der Erfindung ergeben sich aus der nachfolgenden Beschreibung eines speziellen Ausführungsbeispiels anhand der Zeichnung. Es zeigen:

Fig.1          den grundsätzlichen Aufbau einer erfindungsgemäßen Filterpresse mit zwei nebeneinander angeordneten Pressenelementen,

Fig.2a bis 2d  Einzelheiten eines Pressenelementes der Presse gemäß Figur 1 in verschiedenen Funktionsphasen,

Fig.3          ein Pressenelement in perspektivischer Explosionsdarstellung mit einem aus Segmenten, die durch Stecknähte miteinander verbunden sind, zusanmengesetzten, oberen Filtertuch und einem unteren, durchgehend bandförmig ausgebildeten Filtertuch und

Fig.4          eine der Stecknähte des oberen Filtertuches gemäß Figur 3 im Querschnitt.

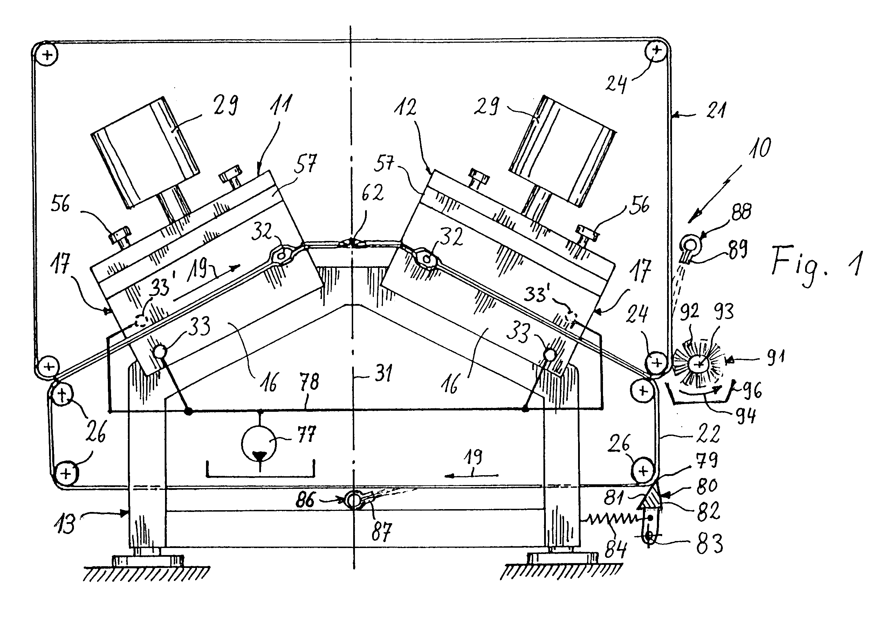

Die in der Fig. 1 dargestellte, insgesamt mit 10 bezeichnete Filterpresse, sei für die nachfolgende Beschreibung konstruktiver und funktioneller Einzelheiten ohne Beschränkung der Allgemeinheit als eine für die Entwässerung kommunaler Klärschlämme geeignete Presse vorausgesetzt. Es versteht sich jedoch, daß eine solche Filterpresse 10 auch zum Entzug anderer Flüssigkeiten, z.B. Ölen oder Lösungsmitteln, aus Industrieschlämmen der verschiedensten Art benutzbar ist.

Die Filterpresse 10 umfaßt beim dargestellten, speziellen Ausführungsbeispiel zwei insgesamt je mit 11 bzw. 12 bezeichnete Pressenelemente, die auf ein gemeinsames Untergestell 13 montiert sind.

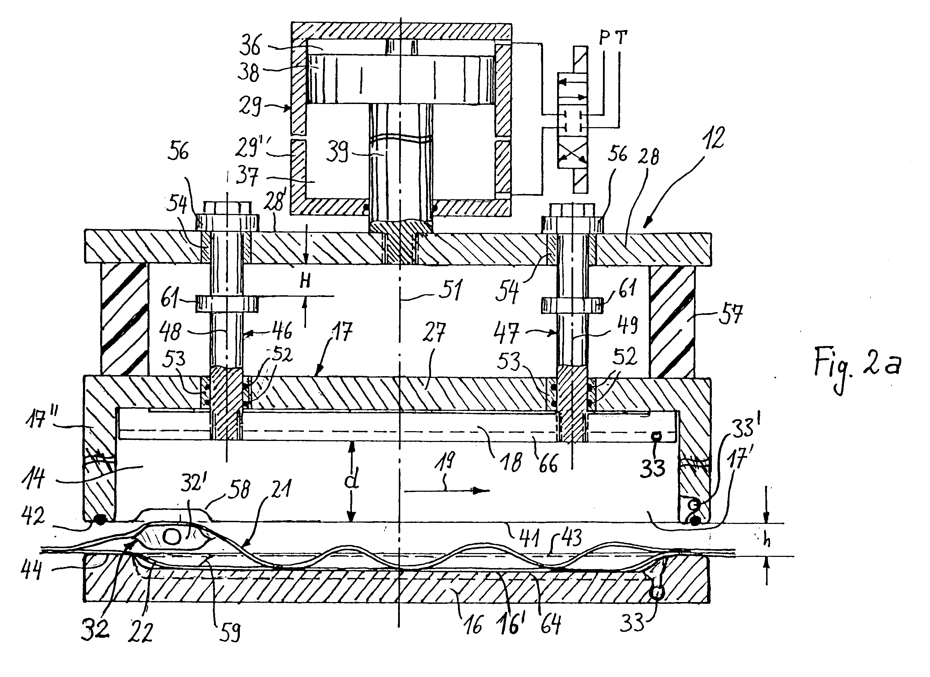

Jedes der beiden Pressenelemente 11 bzw. 12 ist, seinem grundsätzlichen Aufbau nach, eine Kammerfilter-Presse, die wie am besten aus den Figuren 2a bis 2c ersichtlich, jeweils nur eine einzige, mit Naßschlamm befüllbare Pressenkammer 14 hat, die gemäß den Figuren 2a bis 2c durch eine untere Membranplatte 16 mit etwa rechteckiger Grundform, ein rechteckigtopfförmiges Schließteil 17, das zur unteren Membranplatte 16 hin offen ist, und eine an dem Schließteil beweglich geführte, obere Membranplatte 18 begrenzt ist, deren Grundfläche, abgesehen von einem geringen Spiel zwischen ihren Umfangs-Stirnflächen und den senkrecht zu der unteren Membranplatte verlaufenden Längs- und Querwänden 17' und 17'' des Schließteils 17 der lichten Querschnittsfläche des topfförmigen Schließteils 17 entspricht.

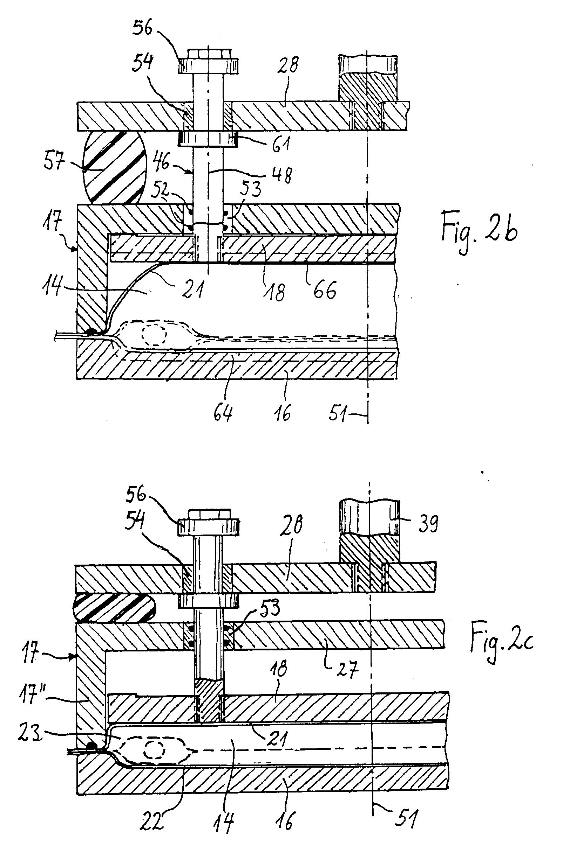

"Längsrichtung" bedeutet dabei die durch den Pfeil 19 der Figur 1 bzw. der Figur 2a markierte Richtung, entlang welcher ein oberes, insgesamt mit 21 bezeichnetes Filtertuch und ein unteres Filtertuch 22 die beiden Pressenelemente 11 und 12 durchsetzen und entlang dieser Richtung 19 zum Austragen des weitgehend entwässerten Schlammkuchens 23 (Fig. 2c)beim dargestellten, speziellen Ausführungsbeispiel gemeinsam transportierbar sind.

Die Filtertücher 21 und 22 sind als in sich geschlossene Bänder ausgebildet, deren Verlauf in der Figur 1 schematisch angedeutet ist. Das obere Filtertuch 21 ist über Walzen 24, die sowohl zur Führung und Umlenkung als auch zum Antrieb des oberen Filtertuches ausgenutzt sind, geleitet, das untere Filtertuch 22 über entsprechende Walzen 26. Ein auf bekannte Weise realisierbarer Antrieb für die beiden Filtertücher 21 und 22 ist der Einfachheit halber nicht dargestellt.

Die Pressenelemente 11 und 12 sind, wie aus der Figur 1 ersichtlich, auf dem Untergestell 13 in einer geneigten Lage montiert, wobei die Membranplatten 16 und 18 und die zu diesen parallele Deckplatte 27 des Schließteils 17 und eine obere Führungsplatte 28, an der eine insgesamt mit 29 bezeichnete hydraulische Antriebsvorrichtung angreift, eine Neigung von ca. 30° haben. Durch diese geneigte, beim dargestellten Ausführungsbeispiel gemäß Figur 1 bezüglich der vertikalen Quermittelebene 31 der Filterpresse symmetrische Anordnung der Filterelemente 11 und 12 wird sowohl das Einbringen des Naßschlammes über hochliegende Einfüllstutzen 32 als auch der Abfluß des Filtrates über tiefliegende Auslaßöffnungen 33, mit denen sowohl die unteren Membranplatten 16 als auch die oberen Membranplatten 18 versehen sind, aus den Pressenkammern erleichtert, wobei das Schließteil 17, wie in der Figur 2a angedeutet, mit den Auslaßöffnungen 33 der oberen Membranplatte 18 kommunizierende Auslaßkanäle 33' hat, über die das Filtrat nach außen abströmen kann.

Zur Erläuterung weiterer baulicher und funktioneller Details der Pressenelemente 11 und 12 der Filterpresse 10 sei nunmehr auf die Figuren 2a bis 2c verwiesen, in denen eines der Pressenelemente - das Pressenelement 12 - der Einfachheit der Darstellung halber in horizontaler Anordnung dargestellt ist.

Die untere Membranpatte 16 und das Gehäuse 29' der als doppelt wirkender Hydraulikzylinder ausgebildeten hydraulischen Antriebsvorrichtung des Pressenelements 12 sind in ortsfester Lage am Pressengestell 13 montiert (die diesbezügliche Befestigung für das Zylindergehäuse 29' ist der Einfachheit halber nicht dargestellt).

Durch alternative Druckbeaufschlagung und -entlastung der Arbeitsräume 36 und 37 werden die Schließ- und Preß-Bewegungen des Schließteils 17 und der oberen Membranplatte 18 bzw. die Öffnungshübe des Pressenelements 12 zum Austragen des Filtergutes gesteuert.

In der Figur 2a ist die nach Abschluß eines Preßvorganges eingenommene Grundstellung des Pressenelements 12 dargestellt, in welcher die Pressenkammer 14 geöffnet und der Schlammkuchen bereits ausgetragen ist. Der Hydraulikzylinder-Kolben 38, der über eine Kolbenstange 39 fest mit der oberen Führungsplatte 28 verbunden ist, das Schließteil 17 und die obere Membranplatte 18 befinden sich in ihrer oberen Endstellung, wobei der lichte Abstand h der nach unten weisenden freien Stirnflächen 41 und 42 der Längs- und Querwände 17' und 17'' des Schließteiles 17 von den dazu parallelen, gegenüber der übrigen Innenfläche der unteren Membranplatte 16 etwas erhabenen Gegenfläche 43 und 44 der unteren Membranplatte 16 etwa 10 mm beträgt.

Mit der oberen Membranplatte 18 sind zwei Führungsbolzen 46 und 47 fest verbunden, deren Längsachen 48 und 49 parallel zur zentralen Achse 51 des Hydraulikzylinders 29 verlaufen und symmetrisch bezüglich dieser sowie gemeinsam mit derselben in der vertikalen Längs- oder Quermittelebene, beim dargestellten Ausführungsbeispiel in der Längsmittelebene, des Pressenelements 12 angeordnet sind. Diese Führungsbolzen 46 und 47 durchqueren je eine mit Dichtungen 52 versehene Führungshülse 53 der Deckplatte 27 des Schließteiles 17 eine mit dieser Führungshülse 53 fluchtend angeordnete Gleitlagerbüchse 54 der oberen Führungsplatte 28 und stützen sich - in der dargestellten Grundstellung des Pressenelements 12 mit je einem Anschlagring 56 an der Oberseite 28' der oberen Führungsplatte 28 ab.

Zwischen der oberen Führungsplatte 28 und der Deckplatte 27 des Schließ teiles 17 ist ein in deren Randbereichen verlaufender, in sich geschlossener, aus einem elastischen Material, z.B. einem Polyurethan-Schaumstoff bestehender Ring 57 angeordnet, der unter einer Mindest-Vorspannung steht und dadurch das Schließteil 17 in Anlage mit der oberen Membranplatte 18 drängt. Der zur Befüllung der Pressenkammer 14 von der Längsseite her vorgesehene Einfüllstutzen 32 hat ein Formstück 32', dessen Querschnitt dem lichten Querschnitt einer durch gegenüberliegende Randausnehmungen 58 und 59 des Schließteils 17 bzw. der unteren Membranplatte im geschlossenen Zustand des Pressenelements 12 begrenzten Öffnung geometrisch ähnlich ist, wobei diese Öffnung 58,59, wenn die Pressenkammer geschlossen ist, wie in den Figuren 2b und 2c dargestellt, durch dieses Formstück 32' und die zwischen diesem und den Randausnehmungen 58 und 59 angeordneten Randabschnitte der Filtertücher 21 und 22 dicht verschlossen ist.

In der in der Figur 2a dargestellten Offen-Stellung des Pressenelements 12 bzw. der Pressenkammer 14 ist das Formstück 32' des Einfüllstutzens 32 von der unteren Membranplatte 16 soweit abgehoben, daß die genannten Randabschnitte des oberen Filtertuches 21 und des unteren Filtertuches 22 ungehindert zwischen dem Formstück 32' und dem Schließteil 17 bzw. dem Formstück 32' und der unteren Membranplatte 16 hindurchgezogen werden können.

Zur Vorbereitung eines Filtrations- bzw. Trocknungsvorganges wird das Pressenelement 12 geschlossen, wobei die obere Führungsplatte 28, das Schließteil 17 und die obere Membranplatte 18 am Ende des Schließhubes des Hydraulikzylinders 29 die in der Figur 2b dargestellte Stellung zueinander einnehmen. Der von dem Kolben 38 des Hydraulikzylinders 29 ausführbare Hub ist großer als der zum Schließen der Pressenkammer 14 erforderliche Absenkungs-Hub h des Schließstückes, so daß der elastische Ringkörper 57, sobald das Schließ teil 17 sich über die Filtertücher 21 und 22 an der unteren Membranplatte 16 abstützt, zusammengedrückt und dadurch weiter vorgespannt wird. Die durch diese zusätzliche Vorspannung des elastischen Ringkörpers 57 erzeugte und in gleichmäßiger Verteilung auf das Schließ teil 17 übertragene Schließkraft ist so bemessen, daß die Pressenkammer 14 unter dem typischerweise 2 Bar betragenden hydrostatischen Druck, mit dem das Filtergut in die Pressenkammer 14 eingespeist wird, mit Sicherheit geschlossen bleibt. Der zur Erhöhung der Vorspannung in dem elastischen Ringkörper 57 ausgeführte Hub H, um den sich der lichte Abstand zwischen der oberen Führungsplatte 28 und der Deckplatte 27 des Schließ teiles 17 verringert, ist so bemessen, daß die obere Führungsplatte 28 nach Ausführung des Vorspannhubes gerade an Anschlagringen 61 der Führungsbolzen 46 und 47 anliegt. Durch den Vorspannhub der oberen Führungsplatte 28 bis in die in der Figur 2b dargestellte Position ändert sich die Lage der oberen Membranplatte 18 bezüglich des Schließteiles 17 nicht, da die Reibung zwischen den Führungshülsen 53 und den Führungsbolzen 46 und 47 hinreichend groß ist, daß die obere Membranplatte 18, obwohl ihr oberer Anschlagring 56 von der oberen Führungsplatte 28 abhebt, wenn diese sich auf das Schließteil 17 zubewegt, innerhalb desselben gleichsam "stehen bleibt". In dieser, maximalem Volumen der Pressenkammer 14, entsprechenden Funktionsstellung des Pressenelements 12 wird die Befüllung der Pressenkammer 14 mit Naßschlamm durchgeführt. Ein einer typischen Auslegung der Filterpresse 10 entsprechender Wert dieses Volumens ist - bei annähernd quadratischem Grundriß der Pressenkammer 14 - 80 Liter. Die Beschickung der Presse mit Naßschlamm, der einen Feststoffgehalt hat, dessen typischer Wert um 5 % liegt, erfolgt mittels einer Pumpe, die in zweckmäßiger Auslegung eine Förderleistung von 400 l/min bei einem Betriebsdruck von ca. 2 Bar hat.

In der dem größten Volumen der Pressenkammer 14 entsprechenden Funktionsstellung des Pressenelements 12 beträgt die zwischen der Unterseite der oberen Membranplatte 18 und den ebenen Randflächen 43 und 44 der unteren Membranplatte 16 gemessene lichte Höhe der Pressenkammer 90 mm. Die Tiefe der sich zwischen den ebenen Randflächen 43 und 44 der unterem Membranplatte 16 erstreckenden, den weitaus größten Teil der Grundfläche der Pressenkammer 14 einnehmenden, flachen Einsenkung 16' beträgt ca. 10 mm.

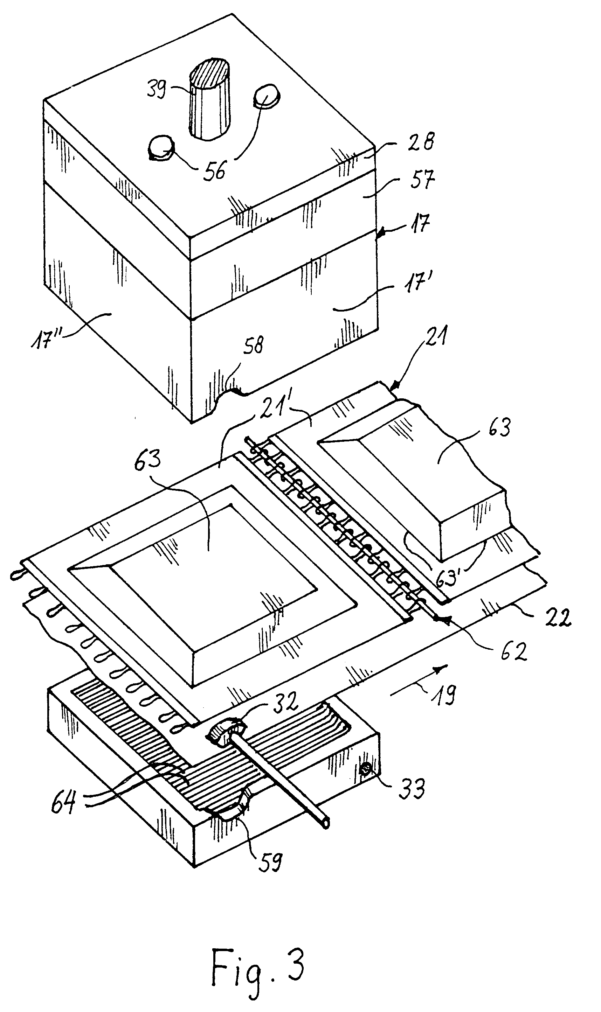

Das obere Filtertuch 21 ist, wie am besten aus der Figur 3, erkennbar, in Segmente 21' unterteilt, die durch quer zur Längsrichtung 19 des Filtertuches 21 verlaufende, insgesamt mit 62 bezeichnete Stecknähte untereinander bzw. mit anschließenden Teilen des Filtertuches 21 verbunden sind. Diese Filtertuch-Segmente 21' bestehen aus einem Filtrationsgewebe, das auch bei üblichen Kammerfilterpressen Verwendung finden kann. In bevorzugter Gestaltung sind diese Segmente 21' aus thermoplastischen Kunststofffasern hergestellt. Die Filtertuch-Segmente 21' sind hinsichtlich ihrer Grundflächen und Anordnung zueinander so bemessen, daß je eines dieser Segmente 21' die obere Innenauskleidung der Pressenkammer 14 der beiden Pressenelemente 11 und 12 der Filterpresse 10 gemäß Figur 1 bilden kann, wobei die diese beiden Filtertuch-Segmente 21' verbindende Stecknaht 62 in dem freien Raum zwischen den beiden Pressenelementen 11 und 12 angeordnet ist. Die Filtertuch-Segmente 21' sind gemäß der Darstellung der Figur 3 mit pyramidenstumpfförmigen, flachen Ausbuchtungen 63 versehen, die sich, wenn die Pressenkammern 14 über die Einfüllstutzen 32 mit Naßschlamm beschickt werden, in der aus der Figur 2b ersichtlichen Weise großflächig an die obere Membranplatte 18 des jeweiligen Pressenelements 11 bzw. 12 anlegen, so daß der von den Filtertüchern 21 und 22 - das untere, durchgehendbandförmige Filtertuch 22 wird an die untere Membranplatte 16 angedrückt - eingeschlossene Aufnahmeraum für den eingebrachten Naßschlamm praktisch das gesamte Kammervolumen einnimmt. Während des Beschickungsvorganges aus diesem von den Filtertüchern 21 und 22 umschlossenen Raum der Pressenkammer 14 durch die Filtertücher 21 und 22 nach oben und unten austretendes Wasser kann durch Längsrillen 64 und 66 der unteren Membranplatte 16 bzw. der oberen Membranplatte 18, die mit der Auslaßöffnung 33 der jeweiligen Membranplatte 16 bzw. 18 in kommunizierender Verbindung stehen, ungehindert abströmen. Durch die insoweit erläuterte Beschickung der Pressenkammer 14 mit Naßschlamm bei einem Druck von ca. 2 Bar und die hierbei gleichzeitig stattfindende Filtration wird in dem von den Filtertüchern 21 und 22 eingeschlossenen Teil des Kammervolumens schließlich eine Anreicherung des Feststoffgehaltes auf einen Wert um 20 % bei sehr gut homogener Feststoffverteilung erzielt. Eine darüber hinausgehende Steigerung des Feststoffgehaltes bzw. relative Trocknung des Naßschlammes allein durch weitere Zufuhr von Naßschlamm ist durch einen Filtrationsvorgang, wie insoweit erläutert, praktisch nicht möglich; demgemäß wird der Beschickungsvorgang, z.B. nach einer einem Erfahrungswert entsprechenden Zeitspanne, beendet, wenn die genannte homogene Verteilung des Feststoffgehaltes in der Pressenkammer 14 erreicht ist.

Zur weiteren "Trocknung" des in der Pressenkammer 14 eingeschlossenen bzw. innerhalb von den Filtertüchern 21 und 22 umschlossenen Naßschlammes wird nunmehr durch erneute Druckbeaufschlagung des Hydraulikzylinders 29 ein Preßvorgang durchgeführt, in dessen Verlauf sich die obere Membranplatte 18 im Sinne einer Verkleinerung des Volumens der Pressenkammer 14 auf die untere Membranplatte 16 zubewegt, wodurch zusätzlich Flüssigkeit aus dem Schlammkuchen 23 ausgepreßt und eine weitere Erhöhung seines Feststoffanteils erzielt wird. Dieser Preßvorgang wird beendet, nachdem in dem Antriebszylinder 29 für eine bestimmte Zeitspanne ein mit dem Höchstwert der Preßkraft verknüpfter Höchstwert des Arbeitsdruckes im Arbeitsraum 36 des Antriebszylinders aufrecht erhalten worden war und durch eine weitere Steigerung der Preßkraft keine nennenswerte zusätzliche Entwässerung des Schlammkuchens 23 mehr erzielt werden kann. Dies ist in der Regel der Fall, wenn der Feststoffgehalt des Schlammkuchens 23 einen Wert um 50 bis 55 % erreicht hat. Um derartige - relativ hohe - Feststoffgehalte im Schlammkuchen 23 zu erzielen, ist es ausreichend, wenn der Antriebszylinder 29 so ausgelegt ist, daß der sich im Schlammkuchen 23 beim Zusammenpressen der höchstmöglichen Preßkraft ergebende hydrostatische Binnendruck etwa 12 Bar beträgt.

Um dies mit Sicherheit erreichen zu können, ist bei der Filterpresse 10 vorgesehen, daß der maximale Preßhub, den die obere Membranplatte 18 ausführen kann, dem lichten Abstand d entspricht, den die obere Membranplatte 18 in der in der Figur 2a dargestellten Grundstellung des Pressenelements 12 von den unteren Begrenzungsflächen 41 bzw. 42 des Schließteiles 17 hat, und daß diesem maximalen Preßhub der oberen Membranplatte 18 eine Volumenreduzierung der Preßkammer 14 auf etwa 1/8 ihres maximalen Volumens entspricht. Die Ausnutzbarkeit der hiernach möglichen, drastischen Reduzierung des Volumens der Pressenkammer 14 zum Zwecke einer wirksamen Schlammentwässerung wird durch die beim Ausführungsbeispiel gemäß Figur 3 pyramidenstumpfförmige Gestaltung der Ausbuchtungen 63 der Segmente 21' des oberen Filtertuches 21 begünstigt, da schon eine mäßige Dehnung des Tuchmaterials im Bereich der Ausbuchtungen 63 ausreicht, damit sich diese großflächig an die durch die obere Membranplatte 18 und das Schließteil 17 gebildeten Wandteile der Pressenkammer 14 anlegen und an deren Verlauf eng anschmiegen können, wodurch ein größtmögliches Kammervolumen für die Schlammbeschickung ausnutzbar wird.

Durch die solchermaßen auch während des Beschickungsvorganges nur begrenzte Dehnung der Filtertuchsegmente 21' im Bereich ihrer - pyramidenstumpf-förmigen - Ausbuchtungen 63, deren durch die Basislinien 63' begrenzte Grundfläche zweckmäßigerweise der lichten Querschnittsfläche der Pressenkammer 14 entspricht, sowie die bei einem anschließenden Preßvorgang erfolgte Zurücknahme dieser Dehnung, werden die Filtertuchsegmente 21' insgesamt nur wenig auf Dehnung beansprucht und sind daher auch nur einem entsprechend geringen Verschleiß unterworfen.

Es versteht sich, daß anstelle der speziell erläuterten pyramidenstumpf-förmigen Ausbuchtungen 63 auch solche mit anderen, z.B. flach-kuppelförmiger Gestaltung vorgesehen sein können, die für den angegebenen Zweck, nämlich eine annähernde Anpassung an die Form der Pressenkammer, je nach deren Gestaltung, am günstigsten erscheint. Derartige Ausbuchtungen können, wenn die Filtertuchsegmente 21' aus thermoplastischem Material bestehen, auf einfache Weise in einem Tiefziehvorgang in praktisch beliebiger Gestaltung hergestellt werden.

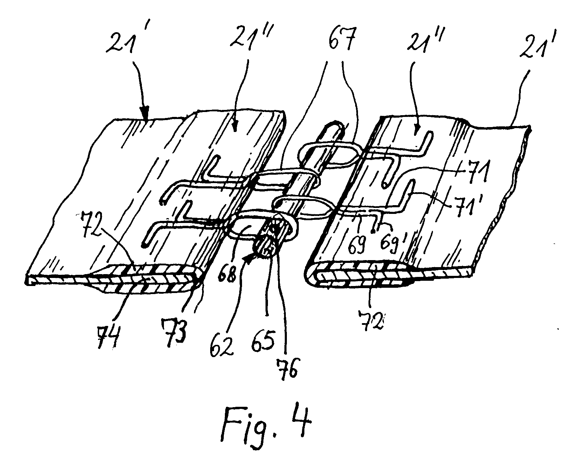

Die zur Verbindung je zweier Segmente 21' des oberen Filtertuches 21 vorgesehenen Stecknähte 62 können in spezieller Gestaltung in der aus der Figur 4 ersichtlichen Weise realisiert sein: an den miteinander zu verbindenden Querrand-Abschnitten 21'' zweier in Längsrichtung des oberen Filtertuches 21 aufeinander folgender Filtertuchsegmente 21' sind in regelmäßigem - geringem - Abstand voneinander Ösen 67 verankert, die einen Langloch-förmigen lichten Querschnitt haben, wobei die Mittelebenen der Ösenöffnungen 68 senkrecht zur Filtertuchebene verlaufen. Die Ösen 67 sind aus einem Stahldraht gefertigt, der eine Dicke von 0,3 bis 0,5 mm hat, und der seitliche Abstand der Ösen 67 des jeweiligen Filtertuchsegments 21' beträgt zwischen 4 und 8 mm, so daß die Ösen 67 des einen Filtertuchsegments 21' mit geringem seitlichem Versatz zwischen je 2 Ösen 67 des gegenüberliegenden Filtertuch-Segments 21' angeordnet werden können und durch, in Längsrichtung des Filtertuches 21 gesehen, sich überlappende freie Querschnittsbereiche der Ösen 67 der beiden Filtertuch-Segmente 21' ein Stahl-Stab 65 hindurchsteckbar ist, der einen Durchmesser hat, der geringfügig kleiner ist als die senkrecht zur Filtertuchebene gemessene lichte Weite der Ösen 67 und eine für die zugfeste Verbindung der Filtertuch-Segmente 21' hinreichende Stabilität hat. Die Ösen 67 haben L-förmige Verankerungsabschnitte 69 und 71 unterschiedlicher Länge, die unmittelbar nebeneinander liegend angeordnet sind und zu entgegengesetzten Seiten hin rechtwinklig abgebogene Verankerungsschenkel 69' und 71' haben, die parallel zur Filtertuchebene verlaufen und am Filtertuchgewebe unmittelbar anliegen. Die Verankerungsabschnitte 69 und 71 sind in eine mit dem Filtertuch-Gewebe der Filtertuch-Segmente 21' z.B. durch Schweißung fest verbundene Kunststoffschicht 72 eingebettet, die eine zugfeste Verbindung der Ösen 67 mit dem jeweiligen Filtertuch-Segment 21' vermittelt. Die unterschiedlichen Längen der Verankerungsabschnitte 69 und 71 der Ösen 67 sind vorgesehen, damit bei möglichst geringem seitlichem Abstand der Ösen 67 eine größtmögliche Länge der Verankerungs-Querschenkel 69' und 71' gewählt werden kann, die für die zugfeste Verankerung der Ösen 67 von Bedeutung ist. Die Kunststoffschicht 72 ist zweckmäßigerweise so ausgebildet, daß sie den freien Querrand 73 des Filtertuch-Gewebes 74 U-förmig umschließt.

Der durch die Ösen 67 der miteinander zu verbindenden Filtertuch-Segmente 21' hindurch steckbare Stab 65 ist, wie in der Figur 4 lediglich schematisch angedeutet, an seinen freien Endabschnitten mit je einer Querbohrung 76 versehen, durch die je ein Splint hindurchsteckbar ist, die den Stab 65 gegen ein Ausrücken aus seiner Eingriff-Stellung mit den Ösen 67 der beiden Filtertuch-Segmente 21' sichern. Eine hierzu äquivalente Sicherung des Stabes 65 gegen ein Ausrücken aus seiner Eingriff-Stellung mit den Ösen 67 der miteinander zu verbindenden Filtertuch-Segmente 21' kann auch in der Weise realisiert sein, daß der Stab 65 an seinem einen freien Ende mit einem Kopf versehen ist, und an seinem anderen Ende einen kurzen Gewindeabschnitt aufweist, auf dem eine Mutter und eine Kontermutter aufschraubbar sind.

Bei dem in der Figur 1 dargestellten, speziellen Ausführungsbeispiel einer erfindungsgemäßen Filterpresse 10 ist es im Prinzip ausreichend, wenn das obere Filtertuch lediglich zwei mit Ausbuchtungen 63 versehene Filtertuch-Segmente 21' aufweist, die im übrigen durch einen flach-ebenen Transportabschnitt, der ebenfalls durch Stecknähte 62 der erläuterten Art mit den beiden Filtertuch-Segmenten 21' zugfest gekoppelt ist, miteinander verbunden sind.

Die Filterpresse 10 ist zweckmäßigerweise auch mit einer Absaug-Einrichtung versehen, mittels derer in den Pressenkammern 14 der Pressenelemente 11 und 12 ein Unterdruck erzeugt werden kann, der das Entweichen von Flüssigkeit aus dem Schlammkuchen 23 begünstigt. Als besonders günstig hierzu hat sich die Verwendung einer in der Figur 1 schematisch angedeuteten Flüssigkeits-Ringpumpe 77 erwiesen, die an eine mit den Auslaßöffnungen 33 der beiden Pressenelemente 11 und 12 kommunizierend verbundene Sammelleitung 78 angeschlossen ist und unterhalb der Pressenelemente 11 und 12 in dem Untergestell 13 der Filterpresse 10 bequem untergebracht werden kann. Eine Ventilanordnung, mittels derer die Einlaßstutzen 32 der Pressenelemente 11 und 12 im Evakuierungsbetrieb abgesperrt werden können, ist der Einfachheit halber nicht dargestellt.

Die Flüssigkeits-Ringpumpe 77 kann im übrigen in jeder Betriebsphase der Filterpresse zum Abtransport des Filtrates ausgenutzt werden.

Um im Austrag-Bereich den Schlammkuchen, der mindestens teilweise an dem unteren Filtertuch 22 haftet, von diesem einfach ablösen zu können, ist ein in der Figur 1 mit keilförmigem Querschnitt angedeuteter Abstreifer 80 vorgesehen, der mit seiner Abstreifkante 79, welche sich in horizontaler Richtung über die gesamte Breite des unteren Filtertuches 22 erstreckt, an den über die gemäß Figur 1 rechte, untere Walze 26 umgelenkten Teil des Filtertuches 22 derart andrückbar ist, daß seine innere Keilfläche 81 tangential zum Umfang der Rolle 26 bzw. des um diese herumgelenkten Filtertuchabschnittes verläuft und seine äußere, sich an die Abstreifkante 79 anschließende Keilfläche 82 senkrecht nach unten verläuft. Dieser Abstreifer 80 ist zweckmäßigerweise um eine horizontale Achse 83 schwenkbar und kann mittels einer vorgespannten Feder 84, wie schematisch angedeutet, in seine für das Abstreifen des Filterkuchens geeignete, dargestellte Position gedrängt werden.

Unterhalb des zwischen den unteren Walzen 26 sich frei in horizontaler Richtung erstreckenden Teils des unteren Filtertuch 22 ist eine erste Sprühvorrichtung 86 vorgesehen, die über die gesamte Breite des Filtertuches 22 verteilt angeordnete Sprühdüsen 87 umfaßt, mittels derer unter hohem Druck stehendes Wasser von unten her schräg gegen die Laufrichtung des Tuches 22 auf dessen Unterseite gesprüht und dadurch Kuchenreste vom Filtertuch 22 abgewaschen werden können.

Eine hierzu analoge zweite Sprühvorrichtung 88 mit Sprühdüsen 89, mittels derer Sprühwasser mit schräg nach unten gegen die Laufrichtung des oberen Filtertuches 21 gerichtetem Wasserstrahl-Verlauf gegen diejenige Fläche des oberen Filtertuches 21 gesprüht werden kann, um an diesem möglicherweise noch haftende Teile des Schlammkuchens abwaschen zu können, ist gemäß der Darstellung der Figur 1 in mittlerer Höhe zwischen den vertikal übereinander angeordneten Walzen 24 vorgesehen, die im austrittsseitigen Bereich der Kammerfilterpresse 10 angeordnet sind.

In Höhe der gemäß Figur 1 rechten unteren Walze 24, über die das obere Filtertuch 21 in der Darstellung der Figur 1 eine Umlenkung von schräg nach unten zu vertikal nach oben führendem Verlauf erfährt, ist ein Bürstenabstreifer 91 angeordnet, mittels dessen an dem oberen Filtertuch 21 nach seiner Umlenkung an der Walze 24 noch haftende, gröbere Teile des Filterkuchens abgebürstet werden können. Dieser Bürstenabstreifer, dessen Borstenbesatz 92 mit mäßiger Kraft an das Filtertuch 21 angedrückt sein kann, ist in vorteilhafter Gestaltung als Bürstenwalze ausgebildet, die sich ebenfalls mindestens über die gesamte Breite des oberen Filtertuches 21 erstreckt und um ihre Längsachse 93 rotierend antreibbar ist, wiederum gegen die Laufrichtung des oberen Filtertuches 21, das heißt in der Darstellung der Figur 1 in dem durch den Pfeil 94 repräsentierten Gegenuhrzeigersinn.

Um zu verhindern, daß auf das obere Filtertuch 21 aufgesprühtes Reinigungswasser auf den ausgetragenen Filterkuchen gelangen kann, ist unterhalb der Bürstenwalze 91 in der dargestellten Anordnung eine Auffangrinne 96 vorgesehen, mittels derer das mittels der zweiten Sprühvorrichtung 80 an das obere Filtertuch 21 gesprühte Wasser zusammen mit den abgebürsteten Filterkuchenteilen aufgefangen und seitlich abgeleitet werden kann. Das zur Reinigung der Filtertücher 21 und 22 ausgenutzte Wasser mit den darin enthaltenen Schlammkuchenteilen wird dem mittels der Kammerfilterpresse 10 auszupressenden Schlamm wieder zugeleitet.

**Patentansprüche**

1. Filterpresse für die Flüssigkeitsabtrennung aus Klärschlämmen oder Industrieschlämmen bis auf einen hohen Feststoffgehalt, mit je durch eine feststehende Membranplatte (16) und ein topfförmiges, zur feststehenden Membranplatte hin- und von dieser weg-bewegbares Schließteil (17) begrenzten Pressenkammern (14), in deren geschlossenem Zustand zwei je für sich endlose Filtertücher (21 und 22), welche die Pressenkammern (14) durchlaufen und entlang der zur feststehenden Membranplatte hnweisenden Ränder des Schließteiles (17) zwischen diesem und der feststehenden Membranplatte (16) einspannbar sind, wobei das Schlammgut über Einfüllstutzen (32) der Pressenkammern (14) zwischen die Filtertücher (21 und 22) einbringbar ist, und mit einer innerhalb des Schließteils (17) auf die feststehende Membranplatte zu- und von dieser weg-bewegbaren, als Pressenstempel wirkenden oberen Membranplatte (18), durch deren zu der feststehenden Membranplatte (16) hin erfolgende Bewegung das durch die Filtertücher (21 und 22) und den Schlammkuchen gebildete Paket zusammendrückbar ist, wobei das der beweglichen Membranplatte (18) zugewandte Filtertuch (21) mit aufwölbbaren Ausbuchtungen (63) versehen ist, die sich bei einer Beschikkung der Pressenkammern (14) mit Schlamm aufwölben und mindestens auf einem Teil der Flächen der beweglichen Membranplatten (18) an diese anlegen können, und wobei die obere Membranplatte (18) der jeweiligen Pressenelemente (11 bzw. 12) mit in Führungshülsen (53) der Deckplatte (27) des Schließteils (17) verschiebbar gelagerten Führungsbolzen (46 und 47) verbunden ist, über die auf die bewegliche Membranplatte (18) die mittels eines Hydraulik-Zylinders (29) erzeugbare Kraft übertragbar ist, durch die die bewegliche Membranplatte (18) ihre das Zusammendrücken des Schlammkuchens vermittelnde Bewegung erfährt, **dadurch gekennzeichnet**, daß das die Ausbuchtungen (63) aufweisende Filtertuch (21) in den einzelnen Pressenkammern (14) zugeordnete Segmente (21') unterteilt ist, die durch Stecknähte (62) untereinander sowie mit weiterführenden Teilen des Filtertuches (21) verbunden sind, daß die Führungsbolzen (46 und 47) auch in Gleitlagern einer fest mit der Kolbenstange (39) des Antriebs-Hydrozylinders (29) verbundenen Führungsplatte (28) verschiebbar gelagert und mit oberhalb dieser Führungsplatte (28) angeordneten Anschlagringen (56) versehen sind, daß zwischen der Führungsplatte (28) und der Deckplatte (27) des Schließteils (17) ein unter einer Mindest-Vorspannung stehender, elastischer Körper (57) angeordnet ist, der in der Offenstellung (Figur 2a) des jeweiligen Presseelements (11 bzw. 12) dessen Schließteil (17) und mit diesem die bewegliche Membranplatte (18) in deren Stellung mit größtmöglichem Abstand von der Führungsplatte (28) drängt, in welcher Stellung die ringförmigen Anschläge (56) der Führungsbolzen (46 und 47) an der Oberseite (28') der Führungsplatte (28) anliegen, und daß die Führungsbolzen (46 und 47) mit zwischen der Führungsplatte (28) und der Deckplatte (27) des Schließteils (17) angeordneten, weiteren Anschlagringen (61) versehen sind, deren Abstand, in der Offenstellung (Figur 2a) des jeweiligen Pressenelements (11 bzw. 12) gesehen, von der Führungsplatte (28) einem Kompressionshub H entspricht, durch den der elastische Körper (57) im Sinne der Erzielung einer Mindest-Schließkraft weiter zusammendrückbar ist, und deren Abstand von der Deckplatte (27) des Schließteiles (17), ebenfalls in der Offenstellung (Figur 2a) des jeweiligen Pressenelements (11 bzw. 12) gesehen, etwas größer ist als der maximale Preßhub d der beweglichen Membranplatte (18).

2. Filterpresse nach Anspruch 1, **dadurch gekennzeichnet**, daß der elastische vorgespannte Körper (57) als Ringkörper ausgebildet ist, der zwischen den Randbereichen der Führungsplatte (28) und der Deckplatte (27) des Schließteils (17) verlaufend angeordnet ist.

3. Filterpresse nach Anspruch 1 oder Anspruch 2, **dadurch gekennzeichnet**, daß die Filtertuch-Segmente (21') aus einem Gewebe aus thermoplastischen Fasern bestehen, und daß die Ausbuchtungen (63) in einem Tiefzieh-Prozeß hergestellt sind.

4. Filterpresse nach Anspruch 3, **dadurch gekennzeichnet**, daß zur Bildung der Stecknähte (62) vorgesehene Ösen (67) in die Querränder (73) der Filtertuch-Segmente (21') verstärkendem Kunststoff-Streifen (72) verankert sind (Fig. 4).

5. Filterpresse nach Anspruch 4, **dadurch gekennzeichnet**, daß die Ösen (67) als Stahldrahtbügel ausgebildet sind, die Verankerungsabschnitte (69 und 71) unterschiedlicher Länge mit rechtwinklig abgebogenen Verankerungsschenkeln (69' und 71) haben, die in die Verstärkungs-Kunststoffschicht (72) eingebettet sind.

6. Filterpresse nach Anspruch 4 oder Anspruch 5, **dadurch gekennzeichnet**, daß die streifenförmigen Verstärkungs-Kunststoffschichten (72) die freien Querränder (73) der Filter-Gewebe (74) der Filtertuch-Segmente (21') U-förmig umgreifen (Figur 4).

7. Filterpresse nach einem der Ansprüche 3 bis 6, **dadurch gekennzeichnet**, daß zur Bildung der Stecknähte (62) vorgesehene Ösen (67) langlochförmige Ösenöffnungen (68) haben.

8. Filterpresse nach einem der Ansprüche 1 bis 7, **dadurch gekennzeichnet**, daß die der unteren Membranplatte (16) zugewandten Stirnflächen (41 und 42) der Längs- und Querwände (17' und 17'') des Schließstückes (17) mit glatter Krümmung an die Innenflächen dieser Schließstück-Wände (17' und 17'') anschließen.

9. Filterpresse nach einem der Ansprüche 1 bis 8, **dadurch gekennzeichnet**, daß ein Abstreifer (80) vorgesehen ist, der am unteren Filtertuch (22) haftende Teile des Filterkuchens vom Filtertuch (22) abhebt.

10. Filterpresse nach Anspruch 9, **dadurch gekennzeichnet**, daß der Abstreifer (80) einen im Querschnitt keilförmigen Abstreifbalken umfaßt, dessen dem Filtertuch (22) zugewandte, innere Keilfläche (81) und dessen äußere Keilfläche (82) entlang einer horizontalen Abstreifkante (79) spitzwinklig aneinander anschließen, daß dieser Abstreifbalken um eine horizontale Achse (83) schwenkbar und z.B. mittels einer Feder (84) derart an einen über eine Walze (26) des Pressengestells umgelenkten Abschnitts des Filtertuches (22) andrückbar ist, daß seine innere Keilfläche (81) tangential zum Umfang der Walze (26) bzw. des über diese umgelenkten Abschnittes des Filtertuches (22) verläuft und die Abstreifkante (79) unmittelbar an diesem Abschnitt des Filtertuches (22) anliegt.

11. Filterpresse nach einem der Ansprüche 1 bis 10, dadurch gekennzeichnet, daß ein weiterer Abstreifer (91) vorgesehen ist, mittels dessen am oberen Filtertuch (21) haftende Teile des Filterkuchens abstreifbar sind.

12. Filterpresse nach Anspruch 11, dadurch gekennzeichnet, daß der zweite Abstreifer (91) als ein sich mindestens über die volle Breite des oberen Filtertuches (21) erstreckender Bürstenabstreifer ausgebildet ist.

13. Filterpresse nach Anspruch 12, dadurch gekennzeichnet, daß der Bürstenabstreifer (91) in Höhe einer austrittsseitigen, dem oberen Filtertuch (21) eine nach oben gerichtete Umlenkung vermittelnden Umlenkwalze (24) des Pressengestells angeordnet ist und sich mit seinem Borstenbesatz (92) über das Filtertuch (21) an dieser Umlenkwalze (24) abstützt.

14. Filterpresse nach Anspruch 13,

dadurch gekennzeichnet, daß der Bürstenabstreifer (91) als Bürstenwalze ausgebildet ist, die um ihre zentrale Längsachse (93), welche parallel zur zentralen Längsachse der gegenüberliegend angeordneten Umlenkwalze (24) und in gleicher Höhe wie diese verläuft, drehbar ist, und daß diese Bürstenwalze drehbar antreibbar ist, derart, daß sich der Borstenbesatz (92) an der Abstreifstelle gegen die Laufrichtung des oberen Filtertuches (21) bewegt.

15. Filterpresse nach einem der Ansprüche 1 bis 14,

dadurch gekennzeichnet, daß mindestens eine Sprühvorrichtung (86 und/oder 88) vorgesehen ist, mittels derer Reinigungsflüssigkeit - Reinwasser oder Filtrat der Filterpresse (10) - auf einen sich zwischen Umlenkwalzen (26 und/oder 28) des Pressengestells frei geführten Bereich des unteren Filtertuches (22) und/oder des oberen Filtertuches (21) sprühbar ist, der im Pressenbetrieb einen Teil der Umhüllung des Schlammkuchens bildet.

16. Filterpresse nach Anspruch 15, dadurch gekennzeichnet, daß eine zur Reinigung des unteren Filtertuches (22) vorgesehene Sprühvorrichtung (86) zentral unterhalb eines horizontal von der Austrittsseite zur Eingangsseite der Filterpresse (10) frei geführten Abschnittes des unteren Filtertuches (22) angeordnet und mit im Abstand über die Breite des Filtertuches (22) verteilt angeordneten Sprühdüsen (87) versehen ist, mittels derer unter hohem Druck stehende Reinigungsflüssigkeit von unten her mit schräg ansteigendem, gegen die Transportrichtung des Filtertuches (22) gerichtetem Strahlverlauf, gegen dieses sprühbar ist.

17. Filterpresse nach Anspruch 15, dadurch gekennzeichnet, daß eine zur Reinigung des oberen Filtertuches (21) vorgesehene Sprühvorrichtung (88) in mittlerer Höhe zwischen zwei Umlenkwalzen (24) des Pressengestells angeordnet ist, zwischen denen das Filtertuch (21) mit vertikalem Verlauf frei geführt ist und mit im Abstand über die Breite des Filtertuches (21) verteilt angeordneten Sprühdüsen (89) versehen ist, mittels derer unter hohem Druck stehende Reinigungsflüssigkeit mit schräg nach unten, gegen die Transportrichtung des Filtertuches (21) gerichtetem Strahlverlauf gegen dieses sprühbar ist.

18. Filterpresse nach Anspruch 17 in Verbindung mit einem der Ansprüche 11 bis 14,

dadurch gekennzeichnet, daß die Sprühvorrichtung (88) oberhalb des Abstreifers (91) angeordnet ist, und daß unmittelbar unterhalb des Abstreifers (91) eine Auffangrinne (96) vorgesehen ist, mittels derer die Reinigungsflüssigkeit in Querrichtung ableitbar ist.

**Claims**

1. Filter press for separating liquids from sewage sludge or industrial sludge to obtain a high solid content, having press chambers (14), which are respectively defined by a stationary diaphragm plate (16) and a pot-shaped closing member (17) which is movable towards and away from the stationary diaphragm plate, with two respective endless filter cloths (21 and 22) which pass through the press chambers (14) when in their closed state and are clamped along the edges of the closing member (17) facing towards the stationary diaphragm plate between the member and the stationary diaphragm plate (16), whereby the sludge is entered via feed sockets (32) of the press chambers (14) between the filter cloths (21 and 22) and the packet formed by the filter cloths (21 and 22) and the sludge mass is compressed by means of an upper diaphragm plate (18), which is movable towards and away from the stationary diaphragm plate within the closing member (17) and serving as press die, and by its movement towards the stationary diaphragm plate (16), in which respect the filter cloth facing towards the movable diaphragm plate (18) is provided with bulging widenings (63) which, when the press chambers (14) are supplied with sludge, bulge and abut at least a portion of the surfaces of the movable diaphragm plates (18), and whereby the upper diaphragm plate (18) of the respective press elements (11 or 12) are connected to guide pins (46 and 47), which are mounted to be displaceable in guide sleeves (53) of the cover plate (27) of the closing member (17) and to which a force produced by means of a hydraulic cylinder (29) is transferable via the movable diaphragm plate (18) which force offers the movable diaphragm plate (18) the movement which causes the compression of the sludge mass, **characterised in that** the filter cloth (21) with bulges (63) is divided into segments (21) associated with the individual press chambers (14), which segments are interconnected by perforation seams (62) and connected to onward guiding parts of the filter cloth (21), that the guide pins (46 and 47) are also displaceably mounted in glide mounts of a guide plate (28) which is firmly attached to the piston rod (39) of the drive's hydro cylinder (29) and provided above this guide plate (28) with stop rings (56), that between the guide plate (28) and the cover plate (27) of the closing member (17) is arranged an elastic body (57) under minimum pretension, which in the open position (Fig. 2a) of a respective press element (11 or 12) pushes both its closing member (17) and the movable diaphragm plate (18) into their position of maximum distance from the guide plate (28), in which position the circular stops (56) of the guide pins (46 and 47) abut the top (28') of the guide plate (28), and that the guide pins (46 and 47) are provided with further stop rings (61) between the guide plate (28) and the cover plate (27) of the closing member (17), the distance of the rings, as seen in the open position (Fig. 2a) of a respective press element (11 or 12), from the guide plate (28) corresponding to one compression stroke H by means of which the elastic body (57) is compressed further in the sense of achieving a minimum closing force, and the their distance from the cover plate (27) of the closing member (17), as seen in the open position (Fig. 2a) of the respective press element (11 or 12), is somewhat greater than the maximal press stroke d of the movable diaphragm plate (18).

2. Filter press according to claim 1, **characterised in that** the elastic pretensioned body (57) is a ring body which is disposed between the edge regions of the guide plate (28) and the cover plate (27) of the closing member (17).

3. Filter press according to claim 1 or claim 2, **characterised in that** the filter-cloth segments (21') are made of a weave of thermoplastic fibres, and that the bulges (63) are produced in a deep-drawing process.

4. Filter press according to claim 3, **characterised in that** eyes (67) provided for forming perforation seams (62) are anchored in transverse edges (73) of synthetic material strips (72) which reinforce the filter-cloth segments (21')(Fig. 4).

5. Filter press according to claim 4, **characterised in that** the eyes (67) are arranged as steel-wire yokes with anchorage sections (69 and 71) of different length with rectangularly bent anchor shanks (69' and 71) which are embedded in the reinforcing synthetic-material layer (72).

6. Filter press according to claim 4 or claim 5, **characterised in that** the stripe-shaped reinforcing synthetic-material layers (72) surround the free transverse edges (73) of the filter weave (74) of the filter-cloth segments (21') in U-shape (Fig. 4).

7. Filter press according to one of claims 3 to 6, **characterised in that** eyes (67) provided for forming perforation seams (62) have elongate eye apertures (68).

8. Filter press according to one of claims 1 to 7, **characterised in that** the end surfaces (41 and 42), which are oriented towards the lower diaphragm plate (16), of the longitudinal and transverse walls (17' and 17'') of the closing member (17) adjoin with smooth curvature the inside surfaces of these closing-member walls (17' and 17'').

9. Filter press according to one of claims 1 to 8, **characterised in that** a scraper (80) is provided for lifting parts of the filter mass adhering to the lower filter cloth (22) from the filter cloth (22).

10. Filter press according to claim 9, **characterised in that** the scraper (80) comprises a cross-sectionally wedgeshaped scraper bar, its inner wedge surface facing towards the filter cloth (22) and its outer wedge surface (82) adjoining each other at an acute angle along a horizontal scraper edge (79), that this scraper bar is pivotable around a horizontal axis (83) and pressed, for example by means of a spring (84), against a section of the filter cloth (22), which has been diverted by a roller (26) of the press frame, so that its inner edge surface (81) extends tangentially to the periphery of the roller (26) or to the thereover diverted section of the filter cloth (22) and the scraper edge (79) directly abuts this section of the filter cloth (22).

11. Filter press according to one of claims 1 to 10, **characterised in that** a further scraper (91) is provided, by means of which particles of the filter mass adhering to the upper filter cloth (21) are scraped off.

12. Filter press according to claim 11, **characterised in that** the second scraper (91) is arranged to be a brush scraper which extends at least over the full width of the upper filter cloth (21).

13. Filter press according to claim 12, **characterised in that** the brush scraper (91) is disposed at the level of a diverting roller (24) of the press frame on the outlet side which conveys an upwardly oriented diversion to the upper filter cloth (21) and is supported with its bristles (92) against this diverting roller (24) via the filter cloth (21).

14. Filter press according to claim 13, **characterised in that** the brush scraper (91) is a brush roller which is rotatable around its central longitudinal axis (93), which extends parallel to the central longitudinal axis of the oppositely disposed diverting roller (24) and at the same height, and that this brush roller is driven to rotate so that the bristles (92) move along the scraping location against the direction of movement of the upper filter cloth (21).

15. Filter press according to one of claims 1 to 14, **characterised in that** at least one spraying means (86 and/or 88) is provided, by means of which a cleaning liquid, such as clean water or a filtrate of the filter press (1∅), is sprayed onto a freely guided portion of the lower filter cloth (22) between diverting rollers (26 and/or 28) and/or of the upper filter cloth (21), which during the press operation forms part of the cover of the sludge packet.

16. Filter press according to claim 15, **characterised in that** a spraying device (86) provided for cleaning the lower filter cloth (22) is disposed centrally below a section of the lower filter cloth (22) which is freely guided horizontally from from the outlet side to the inlet side of the filter press (1∅), and provided with spray nozzles (87) spaced over the width of the filter cloth (22), by means of which a highly pressurised cleaning liquid is sprayed at it from below with upwardly directed spray which is oriented in opposition to the transporting direction of the filter cloth (22).

17. Filter press according to claim 15, **characterised in that** a spraying device (88) for cleaning the top filter cloth (21) is disposed at a middle height between two diverting rollers (24) of the press frame, between which the filter cloth (21) is freely guided on a vertical course and provided with spray nozzles (89) spaced over the width of the filter cloth (21), by means of which a highly pressurised cleaning liquid is sprayed at it with downwardly directed spray which is oriented in opposition to the transporting direction of the filter cloth (21).

18. Filter press according to claim 17 in conjunction with one of claims 11 to 14, **characterised in that** the spraying device (88) is disposed above the scraper (91), and that directly below the scraper (91) is provided a collector ledge (96) by means of which the cleaning liquid is cross-sectionally removed.

**Revendications**

1. Filtre-presse pour séparer les liquides des boues de curage ou des boues industrielles pour obtenir une haute teneur en matières solides, comprenant des chambres de presse (14) respectivement délimitées par une plaque de membrane (16) fixe et un élément de fermeture (17) en forme de pot pouvant être déplacé en direction de la plaque de membrane fixe et éloigné de celle-ci, à l'état fermé desquelles deux tissus filtrants (21 et 22) respectivement sans fin traversent les chambres de presse (14) et peuvent être enserrés le long des bords de l'élément de fermeture (17) dirigés vers la plaque de membrane fixe, entre ce dernier et la plaque de membrane (16) fixe, les boues pouvant être introduites entre les tissus filtrants (21 et 22) par l'intermédiaire de tubulures de remplissage (32) des chambres de presse (14); une plaque de membrane supérieure (18) qui, à l'intérieur de l'élément de fermeture (17), peut être déplacée en direction de la plaque de membrane fixe et éloignée de celle-ci et agit comme coulisseau et dont le mouvement en direction de la plaque de membrane fixe (16) provoque la compression du paquet formé par les tissus filtrants (21 et 22) et le tourteau de boue, le tissu filtrant (21) dirigé vers la plaque de membrane mobile (18) étant muni de renflements (63) pouvant être bombés qui, lors d'un chargement des chambres de presse (14) avec de la boue, se gonflent et peuvent s'appliquer contre la plaque de membrane mobile (18) sur au moins une partie des surfaces de celle-ci, et la plaque de membrane supérieure (18) des éléments de presse respectifs (11 et respectivement 12) étant rattachée à des broches de guidage (46 et 47) montées de manière mobile dans des douilles de guidage (53) de la plaque de recouvrement (27) de l'élément de fermeture (17) et permettant de transmettre à la plaque de membrane mobile (18) la force qui peut être générée au moyen d'un vérin hydraulique (29) et par laquelle ladite plaque de membrane mobile (18) est animée d'un mouvement qui provoque la compression du tourteau de boue, **caractérisé en ce** que le tissu filtrant (21) muni des renflements (63) est subdivisé en segments (21') associés au différentes chambres de presse (14) et reliés entre eux ainsi qu'aux autres éléments du tissu filtrant (21) par des raccordements à broches (62), que les broches de guidage (46 et 47) sont également montées de manière mobile dans des paliers lisses d'une plaque de guidage (28) solidaire de la tige de piston (39) du vérin hydraulique d'entraînement (29) et munies de bagues de butée (56) disposées au-dessus de ladite plaque de guidage (28), qu'entre la plaque de guidage (28) et la plaque de recouvrement (27) de l'élément de fermeture (17) est disposé un corps élastique (57) soumis à une précontrainte minimale qui, dans la position d'ouverture (fig. 2a) de l'élément de presse considéré (11 et respectivement 12) pousse l'élément de fermeture (17) de celui-ci et, avec lui, la plaque de membrane mobile (18) dans la position dans laquelle celle-ci se trouve à la plus grande distance possible de la plaque de guidage (28) et dans laquelle les butées annulaires (56) des broches de guidage (46 et 47) sont appliquées contre la face supérieure (28') de la plaque de guidage (28), et que les broches de guidage (46 et 47) sont munies de bagues de butée (61) supplémentaires disposées entre la plaque de guidage (28) et la plaque de recouvrement (27) de l'élément de fermeture (17), dont l'écartement par rapport à la plaque de guidage (28), vu dans la position d'ouverture (fig. 2a) de l'élément de presse respectif (11 ou 12), correspond à une course de piston H par laquelle le corps élastique (57) peut être comprimé davantage dans le sens de l'obtention d'une force de fermeture minimale, et dont l'écartement par rapport à la plaque de recouvrement (27) de l'élément de fermeture (17), également vu dans la position d'ouverture (fig. 2a) de l'élément de presse respectif (11 ou 12), est légèrement plus grand que la course de compression maximale d de la plaque de membrane mobile (18).

2. Filtre-presse selon la revendication 1, caractérisé en ce que le corps élastique précontraint (57) est conformé en corps annulaire qui s'étend entre les zones marginales de la plaque de guidage (28) et de la plaque de recouvrement (27) de l'élément de fermeture (17).

3. Filtre-presse selon l'une des revendications 1 ou 2, caractérisé en ce que les segments de tissu filtrant (21') sont constitués d'un tissu de fibres thermoplastiques, et que les renflements (63) sont obtenus par un processus d'emboutissage profond.

4. Filtre-presse selon la revendication 3, caractérisé en ce que des oeillets (67) prévus pour la formation des raccordements à broches (62) sont ancrés dans des bandes de matière plastique (72) qui renforcent les bords transversaux (73) de segments de tissu filtrant (21') (fig. 4).

5. Filtre-presse selon la revendication 4, caractérisé en ce que les oeillets (67) sont conformés en étriers en fil d'acier qui comportent des sections d'ancrage (69 et 71) de différentes longueurs avec des branches d'ancrage (69' et 71) pliées à angle droit qui sont encastrées dans la couche de matière plastique de renforcement (72).

6. Filtre-presse selon l'une des revendications 4 ou 5, caractérisé en ce que les couches de matière plastique de renforcement (72) en forme de bandes enveloppent en forme de U les bords transversaux libres (73) des tissus filtrants (74) des segments de tissu filtrant (21') (fig. 4).

7. Filtre-presse selon l'une des revendications 3 à 6, caractérisé en ce que les oeillets (67) prévus pour la formation des raccordements à broches (62) présentent des ouvertures (68) conformées en trous oblongs.

8. Filtre-presse selon l'une des revendications 1 à 7, caractérisé en ce que les surfaces frontales (41 et 42) des parois longitudinales et transversales (17' et 17'') de l'élément de fermeture (17) dirigées vers la plaque de membrane inférieure (16) se raccordent avec une courbure lisse aux surfaces intérieures desdites parois (17' et 17'') de l'élément de fermeture.

9. Filtre-presse selon l'une des revendications 1 à 8, caractérisé en ce qu'il comprend un racleur (80) qui enlève du tissu filtrant (22) des éléments du tourteau qui adhèrent au tissu filtrant inférieur (22).

10. Filtre-presse selon la revendication 9, caractérisé en ce que le racleur (80) enveloppe une poutre de raclage d'une section transversale en forme de clavette, dont la surface de coin intérieure (81) dirigée vers le tissu filtrant (22) et la surface de coin extérieure (82) se raccordent sous un angle aigu le long d'une arête de raclage horizontale (79), que ladite poutre de raclage peut pivoter autour d'un axe horizontal (83) et être appliquée, par exemple au moyen d'un ressort (84), contre une section du tissu filtrant (22) déviée par l'intermédiaire d'un cylindre (26) du bâti de presse, de telle façon que sa surface de coin intérieure (81) s'étend tangentiellement à la circonférence du cylindre (26) et respectivement à la section du tissu filtrant (22) déviée autour de celui-ci et que l'arête de raclage (79) se trouve appliquée directement contre cette section du tissu filtrant (22).

11. Filtre-presse selon l'une des revendications 1 à 10, caractérisé en ce qu'il comprend un racleur supplémentaire (91) à l'aide duquel peuvent être enlevés des éléments du tourteau de filtrage qui adhèrent au tissu filtrant supérieur (21).

12. Filtre-presse selon la revendication 11, caractérisé en ce que le second racleur (91) est conformé en racleur à brosses qui s'étend au moins sur toute la largeur du tissu filtrant supérieur (21).

13. Filtre-presse selon la revendication 12, caractérisé en ce que le racleur à brosses (91) est disposé au niveau d'une poulie de renvoi (24) qui imprime au tissu filtrant supérieur (21) une déviation vers le haut, et s'appuie avec sa garniture de poils (92) sur ladite poulie de renvoi (24) par l'intermédiaire du tissu filtrant (21).

14. Filtre-presse selon la revendication 13, caractérisé en ce que le racleur à brosses (91) est conformé en rouleur brosseur qui peut tourner autour de son axe longitudinal central (93) lequel s'étend parallèlement à l'axe longitudinal central de la poulie de renvoi (24) disposée en face et au même niveau que celui-ci, et que ledit rouleau brosseur peut être entrainé en rotation de manière que la garniture de poils (92) se déplace à l'endroit de raclage dans le sens opposé à la direction de marche du tissu filtrant supérieur (21).

15. Filtre-presse selon l'une des revendications 1 à 14, caractérisé en ce qu'il comprend au moins un dispositif de pulvérisation (86 et/ou 88) à l'aide duquel un liquide de nettoyage - de l'eau pure ou le filtrat du filtre-presse (10) - peut être pulvérisé sur une région du tissu filtrant inférieur (22) et/ou du tissu filtrant supérieur (21) guidée librement entre des poulies de renvoi (26 et/ou 28) du bâti de presse et qui forme, pendant le fonctionnement de la presse, une partie de l'enveloppe du tourteau de boue.

16. Filtre-presse selon la revendication 15, caractérisé en ce qu'un dispositif de pulvérisation (86) prévu pour le nettoyage du tissu filtrant inférieur (22) est disposé au-dessous d'une section du tissu filtrant inférieur (22) guidée librement dans le sens horizontal du côté sortie au côté entrée du filtre-presse (10), et muni de tuyères de pulvérisation (87) réparties à distance sur la largeur du tissu filtrant (22) à l'aide desquelles le liquide de nettoyage sous haute pression peut être projeté par le bas contre le tissu filtrant (22), les jets étant dirigés en oblique vers le haut dans le sens opposé à la direction de transport dudit tissu filtrant.

17. Filtre-presse selon la revendication 15, caractérisé en ce qu'un dispositif de pulvérisation (88) prévu pour le nettoyage du tissu filtrant supérieur (21) est disposé à mi-hauteur entre deux poulies de renvoi (24) du bâti de presse entre lesquelles le tissu filtrant (21) est guidé librement dans le sens vertical, et muni de tuyères de pulvérisation (89) réparties à distance sur la largeur du tissu filtrant (21) à l'aide desquelles le liquide de nettoyage sous haute pression peut être projeté sur le tissu filtrant (21), les jets étant dirigés en oblique vers le bas dans le sens opposé à la direction de transport dudit tissu filtrant.

18. Filtre-presse selon la revendication 17, en combinaison avec l'une quelconque des revendications 11 à 14, caractérisé en ce que le dispositif de pulvérisation (88) est monté au-dessus du racleur (91), et qu'immédiatement au-dessous du racleur (91) est prévue une goulotte collectrice (96) à l'aide de laquelle le liquide de nettoyage peut être évacué dans la direction transversale.

Fig. 1

Fig. 2a

EP 0 245 490 B1

Fig. 2b

Fig. 2c

Fig. 3

EP 0 245 490 B1

Fig. 4